# EUROPEAN PATENT SPECIFICATION

(11) **EP 2 416 953 B1**
(45) Date of publication and mention of the grant of the patent: **02.10.2013**
(21) Application number: 10768628.9
(22) Date of filing: 02.04.2010
(51) Int. Cl.: B32B 5/26, F41H 5/04

(54) **BALLISTIC RESISTANT ARMOR ARTICLES**
KUGELSICHERE PANZERUNGSARTIKEL
ARTICLES DE BLINDAGE RÉSISTANT AUX PROJECTILES BALISTIQUES

(30) Priority: 06.04.2009 US 166947 P
(43) Date of publication of application: 15.02.2012
(73) Proprietor: E. I. du Pont de Nemours and Company, Wilmington, DE 19898 (US)
(72) Inventor: CHIOU, Minshon, J., Chesterfield Virginia 23838 (US)
(74) Representative: Heinemann, Monica
(86) International application number: PCT/US2010/029736
(87) International publication number: WO 2011/022090

(56) References cited:
- WO-A1-93/00389
- US-A- 5 112 667

## Description

### BACKGROUND OF THE INVENTION

### 1. Field of the Invention.

This invention relates to ballistic resistant armor comprising subassemblies of para-aramid filaments.

### 2. Description of Related Art.

Patent publication WO 93/00564 to Chiou and Yang discloses a laminated ballistic structure using woven fabrics made from p-aramid yarn exhibiting an elongation at break of greater than 4.0 %, a modulus of less than 600 g/d, and a tenacity of greater than 23 g/d.

United States patent 5,112,667 to Li et al. teaches a helmet comprising an impact resistant composite shell. The composite shell comprises a plurality of prepreg packets. Each prepreg packet comprises at least about 2 and preferably 5 to 20 prepreg layers. There are from 2 to 50 and preferably 5 to 20 prepreg packets. Each prepreg layer comprises a plurality of unidirectional coplanar fibers embedded in a polymeric matrix. The fibers of adjacent layers in the prepreg packets are at an angle of from 45 degrees to 90 degrees from each other.

United States patent 6,990,886 to Citterio discloses an unfinished reinforced multilayer fabric able to produce a finished reinforced multilayer fabric which includes an initial layer of threads parallel with each other, superimposed, with the interpositioning of a binding layer on at least a second layer of threads, these also being basically parallel with each other, where the threads of the first layer are set in various directions with respect to the threads of the second layer and the two layers are also joined by a large number of binding threads, made of a thermoplastic or thermosetting type material or of a material which is water-soluble or soluble in a suitable solvent.

United States patents 4,916,000 and 5,160,776 to Li et al discloses an improved composite which comprises one or more layers, at least one of said layers comprising a network of high strength filaments having a tensile modulus of at least about 160 grams/denier, a tenacity of at least about 7 g/denier and an energy-to-break of at least about 8 joules/gram in a matrix material, the ratio of the thickness of said layer to the equivalent diameter of said filaments is equal to or less than about 12.8, and composite articles formed from said composite. The smaller the equivalent diameter of the filaments and the thinner the layer, the greater the degree of protection provided, when compared to the protection provided by a composite of comparable weight but having thicker layers and filaments having larger equivalent diameters.

The patents of Li teach that the greater degree of protection desired, the greater the number of layers in the article for a given weight of the article and that very thin layers are desired. However, high quality thin layers can be difficult to produce and laying up large numbers of layers of thin material can creates manufacturing difficulties. Since most multi-layer armor utilizing aramid fibers was originally developed from a woven fabric model, or using the ambiguous concept of "networks of fibers" as a model, there has been limted work devoted strictly to para-aramid unidirectional armor structures; that is, structures comprising fibrous layers in which the fibers are aligned in a substantially unidirectional arrangement without interweaving as in traditional woven fabrics. What is needed is an effective method to create a para-aramid unidirectional that avoids the requirement for an excessive amount of layers to provide adequate ballistic protection.

### BRIEF SUMMARY OF THE INVENTION

In one embodiment, this invention is relates to a subassembly useful in a ballistic armor article, comprising:
a first layer comprising a plurality of first yarns of continuous filaments, said first yarns being substantially parallel in a first direction;
a second layer adjacent to and in contact with said first layer and comprising a plurality of second yarns of continuous filaments, said second yarns being substantially parallel in a second direction skew with respect to the first direction;
wherein the first and second yarns comprise para-aramid yarns having a tenacity of at least 25 grams per dtex and an elongation at break of from 3.6 to 4.5 percent.

### DETAILED DESCRIPTION OF THE INVENTION

This invention is directed to the use of para-aramid yarns having an elongation at break of from 3.6 to 4.5 percent in a subassembly useful in ballistic armor comprising at least two layers of continuous multifilament para-aramid yarns. The yarns within one of the layers are oriented in a substantially parallel direction that is skew from the substantially parallel direction of the yarns in an adjacent layer. The term "skew" means that the yarns in adjacent layers are oriented at different angles relative to each other. A layer in which the yarns effectively are all aligned in one direction is known as a unidirectional or UD layer. As used herein, unidirectional or UD also includes severely unbalanced woven fabrics sometimes referred to as a uni-weaves or uniweaves. Para-aramid uniweave fabrics have more than 90 percent, and more typically more than 95 percent of the para-aramid yarns oriented in the warp direction, the yarns being held in place by a very few lightweight stabilizing yarns interwoven in the weft direction. In many instances, these weft yarns are thermoplastic yarns that assist during layup to maintain the unidirectional nature of the para-aramid yarn but essentially disappear when the final ballistic armor article is molded.

In one embodiment, the subassembly comprises two UD layers, the first yarns in the first layer being oriented in the zero degree or machine direction while the second yarns in the second layer are oriented orthogonally to those in the first layer in the ninety degree or cross direction, such terms being well known to those skilled in the art.

In another embodiment, at least one additional or third yarn is interlaced transversely with the first and second layers to attach the two layers together. Suitable yarns for this purpose comprise fiber selected from the group consisting of polyester fiber, polyethylene fiber, polyamide fiber, aramid fiber, polyareneazole fiber, polypyridazole fiber, polybenzazole fiber and mixtures thereof.

These third yarns can be stitched or inserted by a warp knitting process, both techniques being well understood by practitioners, or any other technique that attaches the two UD layers together with the third yarn.

In a further embodiment the yarns in the first and second layers although being orthogonal to each other are arranged at an angle of + 45 degrees and - 45 degrees relative to the machine direction. Other embodiments include other cross ply angles between the yarns in adjacent layers. In some of these embodiments the yarns in adjacent layers need not be orthogonal to each other.

Each UD layer has a basis weight of from 30 to 300 g/m². In some preferred embodiments the basis weight of each UD layer is from 45 to 250 g/m². In some most preferred embodiments the basis weight of each UD layer is from 55 to 200 g/m². In some most preferred embodiments, both of the subassembly layers have the same basis weight.

In one preferred embodiment, the yarns used in the layers form a substantially flattened array of filaments wherein individual yarn bundles are difficult to detect. In this embodiment, the filaments are uniformly arranged in the layer, meaning there is less than a 20 percent difference in the thickness of the flattened array. The filaments from one yarn shift and fit next to adjacent yarns, forming a continuous array of filaments in the layer. If desired, a resin can be applied to the surface of the layer and in some preferred embodiments the resin partially or fully penetrates and impregnates the uniform layer of filaments.

In an alternative embodiment, the yarns can be positioned such that small gaps are present between the flattened yarn bundles, or the yarns may be positioned such that the yarn bundles butt up against other bundles, while retaining an obvious yarn structure. When distinct bundles are present, resin can be applied to the bundles. If desired, the resin or the application method can be chosen such that the resin remains substantially on the surface of the yarn bundle, not impregnating the filaments. Alternatively, the resin can be fully or partially impregnated into the flattened yarn bundles.

The first and second unidirectional layers comprise a plurality of yarns having a plurality of continuous filaments. Untwisted yarns are preferred because they offer higher ballistic resistance than twisted yarns and because they spread to a wider aspect ratio than twisted yarns, enabling more consistent fiber coverage across the UD layer. For purposes herein, the term "filament" is defined as a relatively flexible, macroscopically homogeneous body having a high ratio of length to width across its cross-sectional area perpendicular to its length. The filament cross section can be any shape, but is typically circular or bean shaped. The filaments can be any length. Preferably the filaments are continuous. Multifilament yarn spun onto a bobbin in a package contains a plurality of continuous filaments.

The yarns have a yarn tenacity of at least 25 grams per dtex and a modulus of at least 500 grams per dtex. Further, the yarns have a linear density of from 100 to 2,000 dtex and an elongation to break of from 3.6 to 4.5 percent. More preferably, the yarns have a linear density of from 400 to 1800 dtex and a tenacity of at least 30 grams per dtex. In still some other embodiments, the yarns have a linear density of less than 500 dtex with a range of from 100 to 500 dtex being especially useful. A finished yarn may also be made by assembling or roving together two precursor yarns of lower linear density. For example two precursor yarns each having a linear density of 850 dtex can be assembled into a finished yarn having a linear density of 1700 dtex.

The use of specific high elongation para-aramid yarns allows for the use of thicker layers in the subassembly without an appreciable loss in ballistic performance. A subassembly comprising two UD layers having a ratio of the thickness of the UD layer to the equivalent diameter of the filaments comprising the layer of at least 13, in conjunction with the yarns comprising the layer having an elongation to break of from 3.6% to 4.5% and a tenacity of at least 25 grams per dtex, allows a finished article to be assembled with fewer subassemblies and yet still meet performance requirements. This offers productivity improvements in the assembly process. The use of thicker UD layers in the subassembly also delivers quality improvements in that the thicker layers have more filaments and therefore better packing density thus reducing gaps between filaments and / or yarns. Gaps in a UD layer will impact antiballistic performance.

The ratio of the thickness of the first or second layers to the equivalent diameter of the filaments comprising the first or second layer is at least 13, more preferably at least 16 and most preferably at least 19. By "equivalent diameter" of a filament we mean the diameter of a circle having a cross-sectional area equal to the average cross-sectional area of the filaments comprising the layer. The ratio is calculated by first determining the thickness of a layer in the subassembly, typically by measuring the average thickness of the final subassembly and then dividing by the number of layers, and then dividing by the effective diameter of a filament used in a layer. Typically, all of the layers are of the same basis weight and all of the layers have the same filaments. If additional resin is present between the first and second yarn layers, the thickness of a layer is calculated by first determining the overall thickness of the subassembly or article and dividing that thickness by the number of yarn layers in the subassembly or article.

The yarns of the present invention are made with filaments made from para-aramid polymer. The term aramid means a polyamide wherein at least 85% of the amide (-CONH-) linkages are attached directly to two aromatic rings. Suitable aramid fibers are described in Man-Made Fibres - Science and Technology, Volume 2, in the section titled Fibre-Forming Aromatic Polyamides, page 297, W. Black et al., Interscience Publishers, 1968. Aramid fibers and their production are, also, disclosed in U.S. Patents 3,767,756; 4,172,938; 3,869,429; 3,869,430; 3,819,587; 3,673,143; 3,354,127; and 3,094,511.

The preferred para-aramid is poly(p-phenylene terephthalamide) which is called PPD-T. By PPD-T is meant the homopolymer resulting from mole-for-mole polymerization of p-phenylene diamine and terephthaloyl chloride and, also, copolymers resulting from incorporation of small amounts of other diamines with the p-phenylene diamine and of small amounts of other diacid chlorides with the terephthaloyl chloride. As a general rule, other diamines and other diacid chlorides can be used in amounts up to as much as about 10 mole percent of the p-phenylene diamine or the terephthaloyl chloride, or perhaps slightly higher, provided only that the other diamines and diacid chlorides have no reactive groups which interfere with the polymerization reaction. PPD-T, also, means copolymers resulting from incorporation of other aromatic diamines and other aromatic diacid chlorides such as, for example, 2,6-naphthaloyl chloride or chloro- or dichloroterephthaloyl chloride or 3,4'-diaminodiphenylether. In some preferred embodiments, the yarns of the subassembly consist solely of PPD-T filaments; in some preferred embodiments, the layers in the subassembly consist solely of PPD-T yarns; in other words, in some preferred embodiments all filaments in the subassembly are PPD-T filaments.

Additives can be used with the aramid and it has been found that up to as much as 10 percent or more, by weight, of other polymeric material can be blended with the aramid. Copolymers can be used having as much as 10 percent or more of other diamine substituted for the diamine of the aramid or as much as 10 percent or more of other diacid chloride substituted for the diacid chloride or the aramid.

In some embodiments, the plurality of first and second yarns are present in the first and second layers as distinct yarn bundles, the distinct yarn bundles further having a polymer resin coating on the outer surface these yarn bundles. Alternatively, if desired, the resin can allowed to impregnate either partially or fully into the yarn. In some embodiments, the weight of resin in the first or second yarn layers is from 8 to 30 percent, more preferably from 12 to 25 percent based on the total weight of yarn and resin in the layer. Suitable resins include polyethylenes, cross-linked polyethylenes, polypropylenes, ethylene copolymers, propylene copolymers and other olefin polymers and copolymers. Examples of other useful resins are thermoplastic elastomers, including block copolymers, unsaturated polyesters, phenolics, polybutyrals, epoxy resins and polyurethane resins.

A typical process to coat or impregnate the yarns of the UD layer with resin comprises the steps of bringing the UD layer into contact with the resin. The resin can be in the form of solution, emulsion, melt or film. When the resin is a solution, emulsion or melt, the UD layer can be immersed in the resin and surplus resin removed off with a doctor blade or coating roll. The resin may also be deposited onto the surface of the UD layer as it passes beneath a resin bath in a blade over roll coating process. The next step is to consolidate the resin impregnated UD layer by drying to remove the solvent or cooling to solidify the melt followed by a calendering step. The coated or impregnated UD layer is then rewound and cut for use in accordance with the present invention. When the resin is in the form of a film, the resin film is placed onto one or both surfaces of the UD layer and consolidated onto or into the UD layer by heat and pressure in a calender. The degree of resin impregnation into the fibers is controlled by the calendering conditions. All the processes described here are well known to those skilled in the art and are further detailed in chapter 2.9 of "Manufacturing Processes for Advanced Composites" by F.C. Campbell, Elsevier, 2004.

An anti-ballistic article can be produced by combining a plurality of subassemblies as described in the above embodiments. This invention is applicable to both soft and hard body armor. Soft armor articles frequently contain no impregnating resin while hard armor articles almost always have an impregnated resin component. Examples of soft armor include protective apparel such as vests or jackets that protect body parts from projectiles. Examples of hard armor include helmets and protective plates for vehicles. It is preferable that the subassemblies are positioned in such a way as to maintain the offset yarn alignment throughout the finished assembly. For example, the second subassembly of the article is placed on top of the first subassembly in such a way that the orientation of the yarns comprising the bottom layer of the second subassembly is offset with respect to the orientation of the yarns comprising the top layer of the first subassembly. The actual number of subassemblies used will vary according to the design needs of each article being made. As an example, an assembly for an antiballistic vest pack typically has a total areal density of between 4.6 to 5.3 kg / m². Thus the number of subassemblies will be selected to meet this weight target with the number typically being from 10 to 30. For hard armor vehicle plates the number of subassemblies would be the amount required to form a cured pressed composite plate having a thickness of about 4.5 cm. For helmets, the cured plate thickness is from about 0.6 cm to 1.3 cm.

### TEST METHODS

The following test methods were used in the following Examples.

Linear Density: The linear density of a yarn or fiber is determined by weighing a known length of the yarn or fiber based on the procedures described in ASTM D1907-97 and D885-98. Decitex or "dtex" is defined as the weight, in grams, of 10,000 meters of the yarn or fiber. Denier (d) is 9/10 times the decitex (dtex).

Yarn Mechanical Properties: The yarns to be tested were conditioned and then tensile tested based on the procedures described in ASTM D885-98. Tenacity (breaking tenacity), modulus of elasticity and elongation to break were determined by breaking yarns on an Instron® tester.

Areal Density: The areal density of a UD layer was determined by measuring the weight of a 10 cm × 10 cm sample of the layer. The areal density of a subassembly or a final article was the weight of a 10 cm × 10 cm sample of the subassembly or article.

Ballistic Penetration Performance: A statistical measure of ballistic performance is V₅₀ which is the average velocity at which a bullet or a fragment penetrates the armor equipment in 50% of the shots, versus non penetration of the other 50% of the shots. The parameter is measured at a zero degree angle of obliquity of the projectile path to the target. Resistance to a 5.56 mm fragment simulating projectiles (FSP) was tested per MIL-STD-662F, using three pairs of complete- and partial-penetrations within 38 m/s impact velocity, while 7.62 mm FSPs were tested per MIL-P-46593A, using three pairs of complete- and partial-penetrations within 38 m/s impact velocity.

UD Layer Thickness and Equivalent Filament Diameter can be determined by standard electron microscopy techniques.

### EXAMPLES

The following examples are given to illustrate the invention and should not be interpreted as limiting it in any way. All parts and percentages are by weight unless otherwise indicated.

### EXAMPLE 1

In this example, unidirectional (UD) layers were made from para-aramid yarn having nominal mechanical properties of 31 grams-force per dtex tenacity and 3.80% elongation at break. 85% of each layer consisted of pararamid continuous filament yarns and 15% by weight was polypropylene binder spread evenly across the yarn surface. The basis weight of each UD layer averaged 181 g/m². Subassemblies were formed by assembling two layers such that the unidirectional yarns in the first layer were oriented 90 degrees to the unidirectional yarns in the second layer. The nominal basis weight of the subassembly was 362 g/m². Twenty seven subassemblies were stacked together into a final article assembly in a manner such that the yarn orientation in each UD layer was at a 90 degree orientation to the yarn orientation in the UD layers on either side. The total areal density of the assembly was 9.8 kg/m². The final article assembly was then molded in a hot press per the manufacturer's recommendations at a 177°C platen temperature and at 34 atmospheres pressure, resulting in cured hard armor panels retaining a 9.8 kg/m² areal density. The cured hard armor panel was cut with a water jet to 46 cm x 46 cm squares. The cut squares were then mounted with C-clamps in each corner to a rigid steel frame, and tested against 5.56 mm and 7.62 mm FSPs. The V₅₀ results obtained are shown in Table 1.

### EXAMPLE A

As a comparison to Example 1, cross-plied unidirectional material made with para-aramid yarns, available under the tradename Gold Shield® GV-2112, was obtained from Honeywell Specialty Materials, Morristown, NJ. This material was supplied as four consolidated elastomeric resin coated UD layers in which the yarn orientation in the respective layers was 0° / 90° / 0° / 90°, which is equivalent to the combination of two subassemblies as defined herein. The total areal density of this four layer structure was 222 g/m² and the areal density of an individual UD layer was 55.5 g/m². The UD layers contained 2000 grade para-aramid yarn available from Teijin Twaron USA Inc., Conyers, GA having nominal mechanical properties of 30 grams-force per dtex and 3.45% elongation-at-break. As in Example 1, a final article assembly having an areal density of 9.8 kg/m² was made using 44 as-supplied "four-layer UD cross-plied assemblies" (or 88 two-layer subassemblies as defined herein) that were stacked together in a manner such that the yarn orientation in each UD layer was at a 90 degree orientation to the yarn orientation in the UD layers on either side. The final article assembly was then molded in a hot press as per the supplier's recommendations (minimum temperature of 115°C and pressure of 3.4 MN/m²) and the resulting cured hard armor panel retained the nominal 9.8 kg/m² areal density. As in Example 1, the molded panel was cut with a water jet to 46 cm x 46 cm squares, which were then mounted with C-clamps in each corner to a rigid steel frame and tested against 5.56 mm and 7.62 mm FSPs. The V₅₀ results obtained are shown in Table 1.

### EXAMPLE 2

Example 1 was repeated except that the final article assembly had 38 subassemblies and had an areal density of 14.7 kg/m². Ballistic testing was also as per Example 1 and the results are shown in Table 1.

### EXAMPLE B

As a comparison to Example 2, Example A was repeated except that a final article assembly having an areal density of 14.7 kg/m² was assembled from 66 as supplied "four-layer UD cross-plied assemblies" which were equivalent to 132 two-layer subassemblies as defined herein. Ballistic testing was also as per Example A and the results shown in Table 1.

Table 1 shows the results from Examples 1, 2, A and B. Most noticeable is that the V₅₀ of the article having the higher areal density of 14.7 kg/m² constructed from 38 subassemblies of UD layers is comparable to that of an identical weight article constructed from 111 lighter weight and thinner UD layers. A reduction of over 60% in the number of layers required to fabricate an article will deliver significant productivity gains during manufacture.

**Table 1**

| Example | Yam Tenacity (g/dtex) | Nominal Yam Elongation to Break (%) | UD Layer Basis Weight (g/m²) | Subassembly Areal Density (g/m²) | Number of Subassemblies | Article Areal Density (kg/m²) | Projectile | V₅₀ (m/s) |
|---|---|---|---|---|---|---|---|---|
| Example A | 30 | 3.45 | 55.5 | 111 | 88 | 9.8 | 5.56-mm FSP | 773, 782 |
| Example 1 | 31 | 3.80 | 181 | 362 | 27 | 9.8 | 5.56-mm FSP | 756 |
| Example B | 30 | 3.45 | 55.5 | 111 | 132 | 14.7 | 5.56-mm FSP | 1020 |
| Example 2 | 31 | 3.80 | 181 | 362 | 38 | 14.7 | 5.56-mm FSP | 1029 , 1042 |
| Example A | 30 | 3.45 | 55.5 | 111 | 88 | 9.8 | 7.62-mm FSP | 668 , 672 |
| Example 1 | 31 | 3.80 | 181 | 362 | 27 | 9.8 | 7.62-mm FSP | 629 , 655 |
| Example B | 30 | 3.45 | 55.5 | 111 | 132 | 14.7 | 7.62-mm FSP | 827 , 835 |
| Example 2 | 31 | 3.80 | 181 | 362 | 38 | 14.7 | 7.62-mm FSP | 805 , 838 |

## Claims

1. A subassembly useful in a ballistic armor article, comprising:
a first layer comprising a plurality of first yarns of continuous filaments, said first yarns being substantially parallel in a first direction;
a second layer adjacent to and in contact with said first layer and comprising a plurality of second yarns of continuous filaments, said second yarns being substantially parallel in a second direction skew with respect to the first direction;
wherein the first and second yarns comprise para-aramid yarns having a tenacity of at least 25 grams per dtex and an elongation at break of from 3.6 to 4.5 percent, and
wherein the ratio of the thickness of the first or second layer to the equivalent diameter of an individual continuous filament in said first or second yarns is at least 13.

2. The subassembly of claim 1 further comprising at least one additional third yarn attaching the first and second layers together.

3. The subassembly of claim 2 wherein the third yarn comprises fiber selected from the group consisting of polyester fiber, polyethylene fiber, polyamide fiber, aramid fiber, polyareneazole fiber, polypyridazole fiber, polybenzazole fiber, and mixtures thereof

4. The subassembly of claim 1 wherein the second yarns in the second layer are oriented orthogonally to the first yarns in the first layer.

5. The subassembly of claim 1 wherein the plurality of first and second yarns are present in the first and second layers as distinct yarn bundles, the distinct yarn bundles further having a polymer resin coating on the outer surface 07 these yarn bundles.

6. The subassembly of claim 1 wherein at least a portion of the plurality of first and second yarns in the first and second layers are impregnated with a polymer resin.

7. A ballistic armor article comprising a plurality of the subassemblies of claim 1.

## Patentansprüche

1. Teilerzeugnis, das in einem kugelsicheren Panzerungsartikel nützlich ist, umfassend:
eine erste Lage, die eine Vielzahl erster Garne aus Endlosfilamenten umfasst, wobei die ersten Garne im Wesentlichen parallel in einer ersten Richtung liegen;
eine zweite Lage, die an der ersten Lage anliegt und mit ihr in Kontakt steht und eine Vielzahl zweiter Garne aus Endlosfilamenten umfasst, wobei die zweiten Garne im Wesentlichen parallel in einer zweiten Richtung schräg mit Bezug auf die erste Richtung liegen;
wobei das erste und das zweite Garn Para-Aramidgarne umfassen, die eine Zähigkeit von mindestens 25 Gramm pro dtex und eine Bruchdehnung von 3,6 bis 4,5 Prozent aufweisen und
wobei das Verhältnis der Dicke der ersten oder der zweiten Lage zum äquivalenten Durchmesser eines einzelnen Endlosfilaments in den ersten oder zweiten Garnen mindestens 13 beträgt,

2. Teilerzeugnis nach Anspruch 1, des Weiteren mindestens ein zusätzliches drittes Garn umfassend, das die erste und die zweite Lage aneinander befestigt.

3. Teilerzeugnis nach Anspruch 2, wobei das dritte Garn Faser ausgewählt aus der Gruppe bestehend aus Polyesterfaser, Polyethylenfaser, Polyamidfaser, Aramidfaser, Polyarenazolfaser, Polypyridazolfaser, Polybenzazolfaser und Mischungen davon umfasst.

4. Teilerzeugnis nach Anspruch 1, wobei die zweiten Garne in der zweiten Lage orthogonal zu den ersten Garnen in der ersten Lage orientiert sind.

5. Teilerzeugnis nach Anspruch 1, wobei die Vielzahl erster und zweiter Garne in der ersten und der zweiten Lage als verschiedene Garnbündel vorliegen, wobei die verschiedenen Garnbündel des Weiteren eine Polymerharzbeschichtung auf der Außenfläche dieser Garnbündel aufweisen.

6. Teilerzeugnis nach Anspruch 1, wobei mindestens ein Teil der Vielzahl erster und zweiter Garne in der ersten und der zweiten Lage mit einem Polymerharz imprägniert ist.

7. Kugelsicherer Panzerungsartikel umfassend eine Vielzahl der Teilerzeugnisse nach Anspruch 1.

## Revendications

1. Sous-assemblage utile dans un article d'armure balistique, comprenant:
une première couche comprenant une pluralité de premiers fils de filaments continus, lesdits premiers fils étant substantiellement parallèles dans un premier sens;
une seconde couche adjacente à et en contact avec ladite première couche et comprenant une pluralité de seconds fils de filaments continus, lesdits seconds fils étant substantiellement parallèles dans un second sens désaxé par rapport au premier sens;
dans lequel le premier et le second fils comprennent des fils de para-aramide ayant une ténacité d'au moins 25 grammes par dtex et un allongement à la rupture de 3,6 à 4,5 pourcent, et
dans lequel le rapport de l'épaisseur de la première ou de la seconde couche(s) au diamètre équivalent d'un filament continu individuel dans ledit premier ou second fil(s) est d'au moins 13.

2. Sous-assemblage selon la revendication 1 comprenant en outre au moins un troisième fil supplémentaire attachant la première et la seconde couches ensemble.

3. Sous-assemblage selon la revendication 2 dans lequel le troisième fil comprend une fibre sélectionnée parmi le groupe constitué de la fibre de polyester, de la fibre de polyéthylène, de la fibre de polyamide, de la fibre d'aramide, de la fibre de polyarèneazole, de la fibre de polypyridazole, de la fibre de polybenzazole et de leurs mélanges.

4. Sous-assemblage selon la revendication 1 dans lequel les seconds fils dans la seconde couche sont orientés de manière orthogonale par rapport aux premiers fils dans la première couche.

5. Sous-assemblage selon la revendication 1 dans lequel plusieurs des premiers et seconds fils sont présents dans la première et la seconde couches sous la forme de faisceaux de fils distincts, les faisceaux de fils distincts ayant en outre un enrobage de résine polymère sur la surface externe de ces faisceaux de fils.

6. Sous-assemblage selon la revendication 1 dans lequel au moins une partie de la pluralité des premiers et des seconds fils dans la première et la seconde couches est imprégnée d'une résine polymère.

7. Article d'armure balistique comprenant une pluralité des sous-assemblages selon la revendication 1.
